(19) Europäisches Patentamt
European Patent Office
Office européen des brevets

(11) **EP 4 660 698 A1**

(12) **EUROPEAN PATENT APPLICATION**

(43) Date of publication:
**10.12.2025 Bulletin 2025/50**

(21) Application number: **25163558.7**

(22) Date of filing: **13.03.2025**

(51) International Patent Classification (IPC):
**G03B 11/04** (2021.01)   **G06F 1/16** (2006.01)
**G06F 3/01** (2006.01)

(52) Cooperative Patent Classification (CPC):
**G03B 11/043; G06F 1/1686;** G06F 3/016

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.06.2024 JP 2024091500**

(71) Applicant: Lenovo (Singapore) Pte. Ltd.
**New Tech Park 556741 (SG)**

(72) Inventors:
• **SHIBAYAMA, Yoshiyuki**
**Yokohama-shi, 220-0012 (JP)**
• **MITSUI, Riku**
**Yokohama-shi, 220-0012 (JP)**
• **INOUE, Toshihiro**
**Yokohama-shi, 220-0012 (JP)**

(74) Representative: **Openshaw & Co.**
**8 Castle Street**
**Farnham, Surrey GU9 7HR (GB)**

(54) **SHUTTER MECHANISM, INFORMATION PROCESSING APPARATUS, AND METHOD OF MANUFACTURING SHUTTER MECHANISM**

(57)     Downsizing is performed while generating an appropriate click sensation by the movement of a shutter. A shutter mechanism includes: a camera (22) that is mounted on a chassis of an information processing apparatus; a shutter (30) that is slidable between a first position and a second position, the first position limiting light reception of a light receiving unit, the second position releasing limitation of the light reception; a first sheet member (41) that is a sheet-shaped magnet sheet relatively fixed to the chassis, the first sheet member including north poles and south poles that are alternately arranged in a slide movement direction at a predetermined pitch; and a second sheet (42) member that is a sheet-shaped magnet sheet relatively fixed to the shutter (30) so that a magnetized surface of the sheet faces a magnetized surface of the first sheet member, the second sheet member including north poles and south poles that are alternately arranged in the slide movement direction at the predetermined pitch and having a magnetization pattern of the north and south poles of the magnetized surface inverted from a magnetization pattern of the first sheet member when being viewed from a direction facing the first sheet member at the first position and the second position.

FIG. 3

**Description**

BACKGROUND OF THE INVENTION

Field of the Invention

The present invention relates to a shutter mechanism, an information processing apparatus, and a method of manufacturing the shutter mechanism.

Description of the Related Art

Recently, there has been known an information processing apparatus, such as a laptop personal computer (laptop PC), which includes a shutter mechanism that slides a lens cover (shutter) covering a built-in camera in order to prevent unintended photographing by the built-in camera (e.g., see Japanese Unexamined Patent Application Publication No. 2020-201886).

However, the conventional shutter mechanism as described above includes a mechanism that causes a deformable elastic body such as a flat spring to overcome a protrusion so as to prevent a lens cover (shutter) from carelessly moving due to gravity, vibration, etc. and generate a click sensation during moving when sliding the lens cover (shutter). The conventional shutter mechanism was difficult to be downsized because the mechanism includes the flat spring and the protrusion.

The present invention has been made to solve the problem, and an object of the present invention is to provide a shutter mechanism, an information processing apparatus, and a method of manufacturing the shutter mechanism, which can be downsized while generating an appropriate click sensation by the movement of a shutter.

SUMMARY OF THE INVENTION

To solve the problem, a shutter mechanism according to the first aspect of the present invention includes: a camera that includes a light receiving unit, the camera being mounted on a chassis of an information processing apparatus; a shutter that is slidable between a first position and a second position, the first position limiting light reception of the light receiving unit, the second position releasing limitation of the light reception; a first sheet member that is a sheet-shaped magnet sheet relatively fixed to the chassis, the first sheet member including north poles and south poles that are alternately arranged in a slide movement direction at a predetermined pitch; and a second sheet member that is a sheet-shaped magnet sheet relatively fixed to the shutter so that a magnetized surface of the sheet faces a magnetized surface of the first sheet member, the second sheet member including north poles and south poles that are alternately arranged in the slide movement direction at the predetermined pitch and having a magnetization pattern of the north and south poles of the magnetized surface inverted from a magnetization pattern of the first sheet member when being viewed from a direction facing the first sheet member at the first position and the second position.

In the shutter mechanism according to the first aspect of the present invention, a length of the second sheet member in the slide movement direction may be configured to be shorter than a length of the first sheet member in the slide movement direction by a movable length of the shutter.

In the shutter mechanism according to the first aspect of the present invention, the length of the second sheet member in the slide movement direction may be configured to be shorter than the length of the first sheet member in the slide movement direction by a length obtained by multiplying a number of click sensations generated by a slide movement of the shutter by a length of double of the predetermined pitch.

An information processing apparatus according to the second aspect of the present invention includes: the shutter mechanism; and the chassis mounted with the shutter mechanism.

In the information processing apparatus according to the second aspect of the present invention, the chassis may be mounted with a display unit, and the shutter mechanism may be arranged in a bezel portion that is provided on the chassis to surround the display unit.

In the information processing apparatus according to the second aspect of the present invention, the first sheet member and the second sheet member may be arranged in the bezel portion to overlap each other in a thickness direction of the chassis.

A method of manufacturing a shutter mechanism according to the third aspect of the present invention, the shutter mechanism including: a camera that includes a light receiving unit, the camera being mounted on a chassis of an information processing apparatus; a shutter that is slidable between a first position and a second position, the first position limiting light reception of the light receiving unit, the second position releasing limitation of the light reception; a first sheet member that is a sheet-shaped magnet sheet relatively fixed to the chassis, the first sheet member including north poles and south poles that are alternately arranged in a slide movement direction at a predetermined pitch; and a second sheet member that is a sheet-shaped magnet sheet relatively fixed to the shutter so that a magnetized surface of the sheet faces a magnetized surface of the first sheet member, the second sheet member including north poles and south poles that are alternately arranged in the slide movement direction at the predetermined pitch and having a magnetization pattern of the north and south poles of the magnetized surface inverted from a magnetization pattern of the first sheet member when being viewed from a direction facing the first sheet member at the first position and the second position, the method includes: cutting out the first sheet member and the second sheet member from the two magnet sheets in a state where the two magnet sheets are superimposed at a stable position at which the north poles and the south poles on the magnetized surfaces facing each other are mutually inverted; adding marks for positioning the first sheet member and the second sheet member to the first sheet member and the second sheet member in a state where the first sheet member and the second sheet member are superimposed; and cutting out the second sheet member to be shortened by a movable length of the shutter.

In the method of manufacturing the shutter mechanism according to the third aspect of the present invention, the marks for positioning may include fixing holes for fixing the first sheet member and the second sheet member, and the adding the marks for positioning may include forming the fixing holes in the state that the first sheet member and the second sheet member are superimposed.

In the method of manufacturing the shutter mechanism according to the third aspect of the present invention, the cutting out the first sheet member and the second sheet member may include cutting out the two magnet sheets to a first length in the slide movement direction in a state where the two magnet sheets are superimposed, and cutting out the cut two magnet sheets having the first length to a second length shorter than the first length in a state where the cut two magnet sheets are superimposed at a stable position at which the north poles and the south poles on the magnetized surfaces facing each other are mutually inverted, to cut out the first sheet member and the second sheet member.

The above-described aspects of the present invention can perform downsizing while generating an appropriate click sensation by the movement of the shutter.

BRIEF DESCRIPTION OF THE DRAWINGS

FIG. 1 is an external view illustrating an example of a laptop PC according to an embodiment;
FIG. 2 is a cross-sectional view illustrating an example of a shutter mechanism according to the present embodiment;
FIG. 3 is an exploded perspective view illustrating an example of the shutter mechanism according to the present embodiment;
FIG. 4 is a configuration diagram illustrating an example of a camera according to the present embodiment;
FIG. 5 is a diagram explaining an example of a positional relationship between a first sheet member and a second sheet member at a use permission position of the camera of the shutter mechanism according to the present embodiment;
FIG. 6 is a diagram explaining an example of a positional relationship between the first sheet member and the second sheet member at a use prohibition position of the camera of the shutter mechanism according to the present embodiment;
FIG. 7 is a flowchart illustrating an example of a method of manufacturing the first sheet member and the second sheet member according to the present embodiment;
FIG. 8 is a diagram explaining the example of the method of manufacturing the first sheet member and the second sheet member according to the present embodiment;
FIG. 9 is a flowchart illustrating a modified example of a method of manufacturing the first sheet member and the second sheet member according to the present embodiment; and
FIG. 10 is a diagram explaining the modified example of the method of manufacturing the first sheet member and the second sheet member according to the present embodiment.

DETAILED DESCRIPTION OF THE INVENTION

Hereinafter, a shutter mechanism, an information processing apparatus, and a method of manufacturing the shutter mechanism according to an embodiment of the present invention will be described with reference to the accompanying drawings.

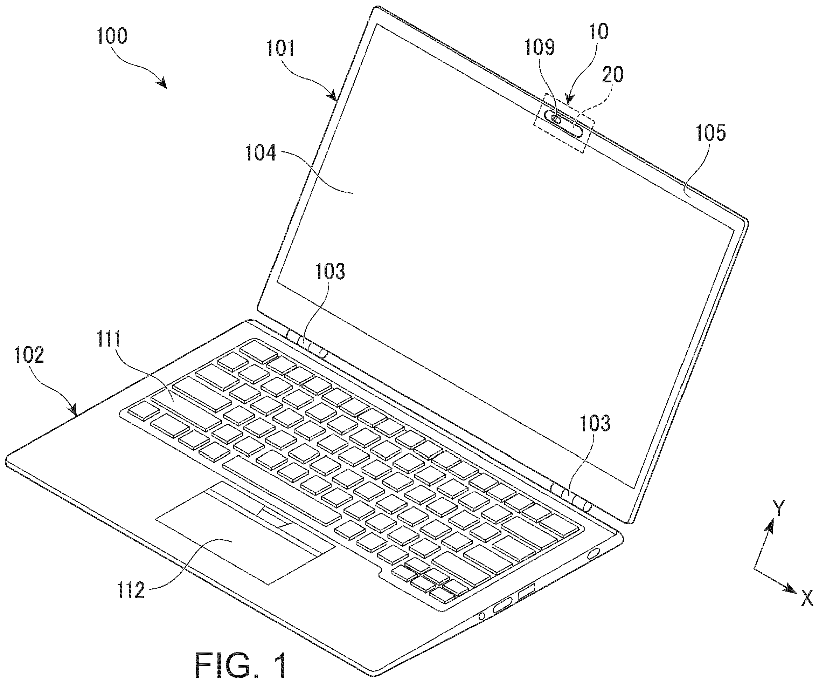

FIG. 1 is an external view illustrating an example of a laptop PC 100 according to the present embodiment. As illustrated in FIG. 1, the laptop PC 100 includes a first chassis 101 (chassis in claims), a second chassis 102, a hinge mechanism 103, a display unit 104, a bezel 105, a camera 20, a shutter mechanism 10, and a cover plate 109. Note that the laptop PC 100 is a clamshell laptop personal computer, for example, and is an example of an information processing apparatus.

The first chassis 101 and the second chassis 102 have a rectangular plate shape. Ends of the first chassis 101 and the second chassis 102 are connected via the hinge mechanism 103. The second chassis 102 is rotatable around a rotation axis formed by the hinge mechanism 103 relative to the first chassis 101. An opening angle between the first chassis 101 and the second chassis 102 can be selected within a range of zero degrees or more and 180 degrees or less, for example.

The first chassis 101 is mounted with the rectangular display unit 104. The display unit 104 is a display device such as a liquid crystal display and an organic electroluminescence display, for example. The first chassis 101 is also referred to as a display chassis. The display unit 104 displays thereon information (e.g., image etc.) based on information processing that is executed by the laptop PC 100.

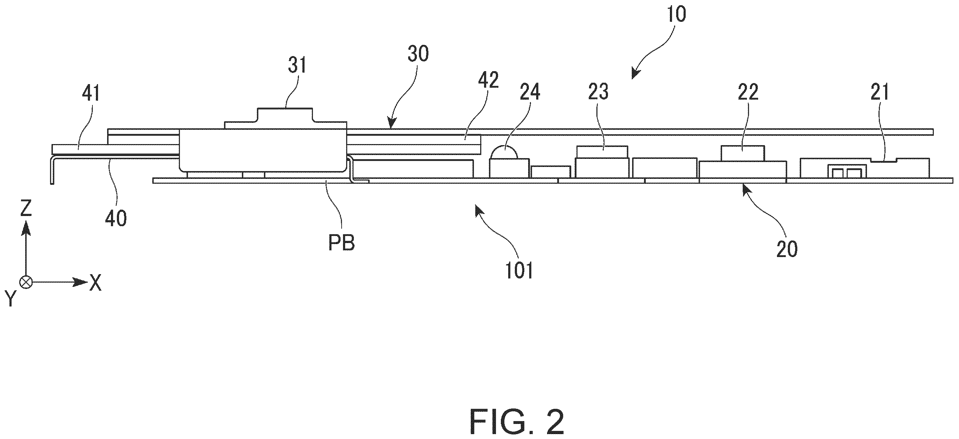

The first chassis 101 includes the bezel 105. The bezel 105 is formed in a rectangular shape surrounding the display unit 104. The camera 20 and the shutter mechanism 10 are mounted on the upper frame portion of the bezel 105, and the cover plate 109 is provided on a portion of the bezel 105 corresponding to the camera 20 and the shutter mechanism 10. Note that the details of the camera 20 and the shutter mechanism 10 will be described later with reference to FIGS. 2 to 4.

The second chassis 102 is mounted with a keyboard 111 and a touch pad 112. The keyboard 111 and the touch pad 112 are an example of an input device. A battery (not illustrated), a storage device (not illustrated), and the like are also mounted on the second chassis 102. The second chassis 102 is also referred to as a system chassis.

Next, a configuration of the camera 20 and the shutter mechanism 10 will be described with reference to FIGS. 2 to 4.

Note that a positional relationship between the first chassis 101, the shutter mechanism 10, and the camera 20 may be explained by using an XYZ Cartesian coordinate system. The direction of the rotation axis of the hinge mechanism 103 is called an X direction. Moreover, within a plane parallel to a display surface of the display unit 104 and a front surface of the bezel 105, a direction perpendicular to the X direction is called a Y direction.

The X direction is an extension direction (length direction of the bezel 105) of the upper frame of the bezel 105. Moreover, the Y direction is a width direction (width direction of the bezel) of the upper frame of the bezel 105. Viewing from a direction perpendicular to the X and Y directions is called a "planar view". A plane along the X and Y directions is called an XY plane. Moreover, a thickness direction of the first chassis 101 is called a Z direction.

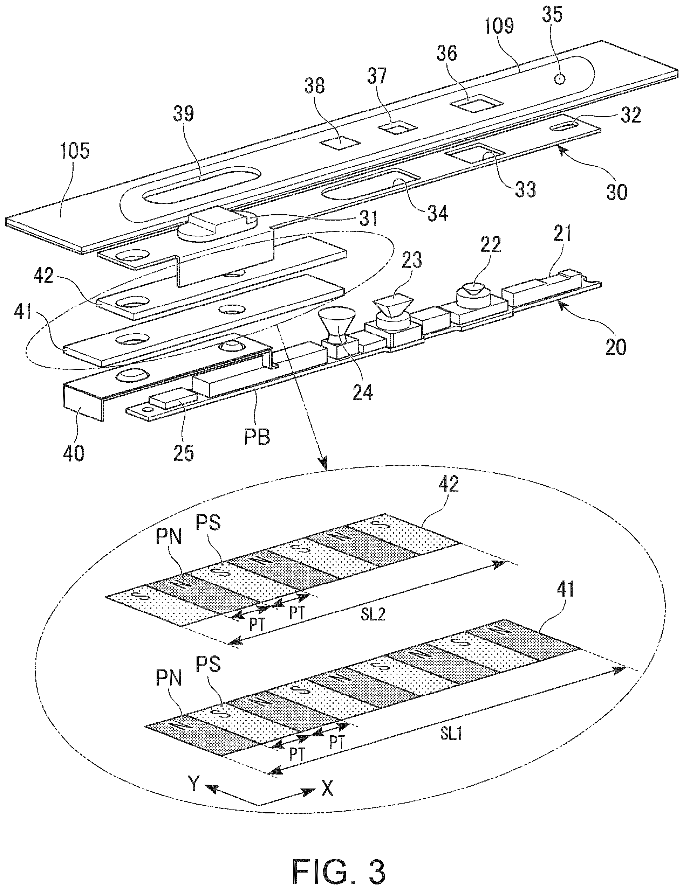

FIG. 2 is a cross-sectional view illustrating an example of the shutter mechanism 10 according to the present embodiment. FIG. 3 is an exploded perspective view illustrating an example of the shutter mechanism 10 according to the present embodiment.

As illustrated in FIGS. 2 and 3, the shutter mechanism 10 includes the camera 20, a shutter 30, a pedestal 40, a first sheet member 41, and a second sheet member 42.

In the first chassis 101, "the camera 20, the pedestal 40, the first sheet member 41, the second sheet member 42, and the shutter 30" are arranged in the shutter mechanism 10 in this order in the thickness direction (Z direction) from a backside of the first chassis 101, and "the bezel 105 and the cover plate 109" are further arranged so as to cover the shutter 30.

The shutter 30 is a member that can slide between a first position at which light reception of the camera 20 (a light receiving unit 22 and an infrared receiving unit 23 to be described later) is limited and a second position at which limitation of light reception is released. The shutter 30 can move in the X direction (slide movement direction). Herein, the first position is a camera use prohibition position for prohibiting the use of the camera 20 by covering lenses (the light receiving unit 22 and the infrared receiving unit 23 to be described later) of the camera 20 with the shutter 30, for example. Moreover, the second position is a camera use permission position for permitting the use of the camera 20 by releasing the lenses (the light receiving unit 22 and the infrared receiving unit 23 to be described later) of the camera 20 from the cover of the shutter 30, for example.

The shutter 30 includes an operation part 31, an indicator hole 32, a visible light receiving hole 33, and an infrared receiving hole 34.

The operation part 31 is a member that is handled by a user when the shutter 30 is slid in the X direction between the camera use prohibition position (first position) and the camera use permission position (second position), and is arranged on the upper portion of the plate-shaped shutter 30.

The indicator hole 32 is a hole for indicator light, and is arranged to overlap with an indicator lamp 21 of the camera 20 to be described later on an axis in the Z direction (the thickness direction of the first chassis 101) at the camera use permission position (second position) of the shutter 30.

The visible light receiving hole 33 is a hole for light reception of the light receiving unit 22 acting as a visible light camera, and is arranged to overlap with the light receiving unit 22 of the camera 20 on the axis in the Z direction (the thickness direction of the first chassis 101) at the camera use permission position (second position) of the shutter 30.

The infrared receiving hole 34 is a hole for light reception of the infrared receiving unit 23 and irradiation of the infrared irradiation unit 24 acting as an infrared camera, and is arranged to overlap with the infrared receiving unit 23 and the infrared irradiation unit 24 of the camera 20 on the axis in the Z direction (the thickness direction of the first chassis 101) at the camera use permission position (second position) of the shutter 30.

The pedestal 40 is a pedestal for fixing the first sheet member 41, and is arranged to cover a portion (portion of a camera board PB) of the camera 20 and is fixed to the first chassis 101.

The first sheet member 41 is a sheet-shaped magnet sheet that is relatively fixed to the first chassis 101 via the pedestal 40. The first sheet member 41 includes north poles PN and south poles PS that are alternately arranged on the magnetized surface of the sheet in the slide movement direction (X direction) at a predetermined pitch (pitch PT). Moreover, the first sheet member 41 is formed by cutting out the magnet sheet by a length SL1 in the slide movement direction (X direction).

Herein, the magnet sheet is a sheet-shaped magnet that is used as a label etc. by attaching the magnet to a metallic white board etc., for example, and includes the north poles PN and the south poles PS that are alternately magnetized at the predetermined pitch (pitch PT).

The second sheet member 42 is a sheet-shaped magnet sheet relatively fixed to the shutter 30 so that the magnetized surface of the sheet faces the magnetized surface of the first sheet member 41. Similarly to the first sheet member 41, the second sheet member 42 includes north poles PN and south poles PS that are alternately arranged in the slide movement direction (X direction) at the predetermined pitch (pitch PT). In the second sheet member 42, the north poles and the south poles are alternately arranged in the slide movement direction at the predetermined pitch, and the magnetization pattern of north and south poles of the magnetized surface is inverted from the magnetization pattern of the first sheet member 41 when being viewed from a direction facing the first sheet member 41 at the first position (camera use prohibition position) and the second position (camera use permission position).

The second sheet member 42 is configured so that the magnetization pattern of the north poles PN and the south poles PS of the magnetized surface is inverted from the magnetization pattern of the first sheet member 41 at the camera use prohibition position and the camera use permission position of the shutter 30. In other words, at the camera use prohibition position and the camera use permission position of the shutter 30, the south poles PS of the second sheet member 42 are arranged at the positions of the north poles PN of the first sheet member 41, and the north poles PN of the second sheet member 42 are arranged at the positions of the south poles PS of the first sheet member 41.

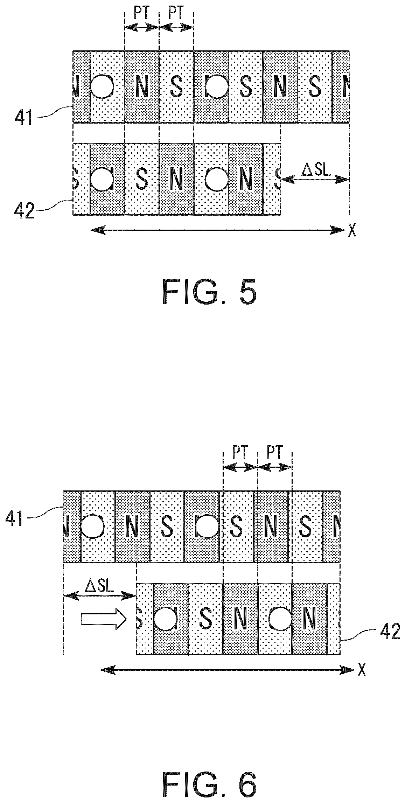

The second sheet member 42 is formed by cutting out the magnet sheet by a length SL2 in the slide movement direction (X direction). The length SL2 of the second sheet member 42 is shorter than the length SL1 of the first sheet member 41. Note that the details of a relationship between the length SL1 of the first sheet member 41 and the length SL2 of the second sheet member 42 will be described later with reference to FIGS. 5 and 6.

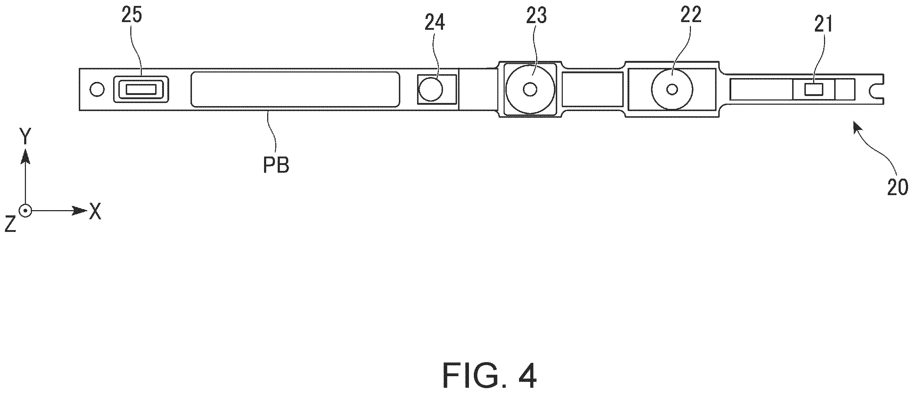

FIG. 4 is a configuration diagram illustrating an example of the camera 20 according to the present embodiment. FIG. 4 illustrates the configuration of the camera 20 when being viewed in a planar view.

As illustrated in FIGS. 2 to 4, the camera 20 includes the indicator lamp 21, the light receiving unit 22, the infrared receiving unit 23, the infrared irradiation unit 24, a connector 25, and the like that are arranged on the camera board PB.

The camera board PB is fixed to the first chassis 101, and is formed to be longer in the X direction and shorter in the Y direction so as to fit within the bezel 105.

The indicator lamp 21 is used as an indicator of the camera 20.

The light receiving unit 22 includes a light receiving lens and an image sensor such as CCD (charge coupled device) and CMOS (complementary metal oxide semiconductor), which are not illustrated, to generate image data based on the received visible light. The light receiving unit 22 is a visible light camera, for example.

The infrared receiving unit 23 includes a light receiving lens and an infrared image sensor such as CCD and CMOS, which are not illustrated, to generate image data based on the received infrared. The infrared receiving unit 23 is an infrared camera (IR camera), for example.

The infrared irradiation unit 24 is an infrared emitting diode etc., for example, and generates infrared light and irradiates the light to the outside.

The connector 25 is a connector for performing communication between a motherboard (not illustrated) and the camera 20 of the laptop PC 100. A communication cable including a power line is connected to the connector. The camera 20 receives power supply from the motherboard (not illustrated) of the laptop PC 100 via the connector 25 and performs various communications with the motherboard (not illustrated) of the laptop PC 100.

As illustrated in FIG. 3, the bezel 105 and the cover plate 109 are arranged to cover the shutter mechanism 10, and the shutter mechanism 10 is configured to fit within the short side width (Y-direction width) of the bezel 105 of the first chassis 101.

The cover plate 109 includes an indicator hole 35, a visible light receiving hole 36, an infrared receiving hole 37, an infrared irradiation hole 38, and an operation hole 39.

The indicator hole 35 is a hole for indicator light, and is arranged to overlap with the indicator lamp 21 and the indicator hole 32 of the shutter 30 on the axis in the Z direction (the thickness direction of the first chassis 101) at the camera use permission position (second position) of the shutter 30.

The visible light receiving hole 36 is a hole for light reception of the light receiving unit 22 of the visible light camera, and is arranged to overlap with the light receiving unit 22 and the visible light receiving hole 33 of the shutter 30 on the axis in the Z direction (the thickness direction of the first chassis 101) at the camera use permission position (second position) of the shutter 30.

The infrared receiving hole 37 is a hole for light reception of the infrared receiving unit 23 of the infrared camera, and is arranged to overlap with the infrared receiving unit 23 and the infrared receiving hole 34 of the shutter 30 on the axis in the Z direction (the thickness direction of the first chassis 101) at the camera use permission position (second position) of the shutter 30.

The infrared irradiation hole 38 is a hole for infrared irradiation of the infrared irradiation unit 24 of the infrared camera, and is arranged to overlap with the infrared irradiation unit 24 and the infrared receiving hole 34 of the shutter 30 on the axis in the Z direction (the thickness direction of the first chassis 101) at the camera use permission position (second position) of the shutter 30.

The operation hole 39 is a hole for operating the operation part 31 of the shutter 30, and is formed to be able to slide the shutter 30 by an operation of the operation part 31.

Next, operations of the shutter mechanism 10 according to the present embodiment will be described with reference to the drawings. FIG. 5 is a diagram explaining an example of a positional relationship between the first sheet member 41 and the second sheet member 42 at the use permission position of the camera 20 of the shutter mechanism 10 according to the present embodiment.

As illustrated in FIG. 5, when the shutter 30 is located at the use permission position, the first sheet member 41 and the second sheet member 42 are arranged to have mutually inverted magnetization patterns of the north pole PN and the south pole PS while the second sheet member 42 is located at the left end. When the magnetization patterns of the first sheet member 41 and the second sheet member 42 are the mutually inverted patterns, a gravitation (attraction force) occurs between the first sheet member 41 and the second sheet member 42, and thus the shutter is in a stable state to maintain this position (camera use permission position of the shutter 30).

Note that the length SL2 of the second sheet member 42 in the slide movement direction is configured to be shorter than the length SL1 of the first sheet member 41 in the slide movement direction by the movable length (length ΔSL) of the shutter 30.

Moreover, at the use permission position, the indicator hole 32, the visible light receiving hole 33, and the infrared receiving hole 34 of the shutter 30 respectively overlap the positions of the indicator lamp 21, the light receiving unit 22, and "the infrared receiving unit 23 and the infrared irradiation unit 24" of the camera 20 to be able to use the camera 20.

Next, in a case where the shutter 30 is slid from the use permission position to the use prohibition position by an operation of the operation part 31, a repulsion (repulsive force) occurs between the first sheet member 41 and the second sheet member 42 when the magnetization patterns of the first sheet member 41 and the second sheet member 42 are changed from the mutually inverted patterns to the same pattern.

For that reason, when the shutter 30 is slid from the use permission position to the use prohibition position, a repulsion (repulsive force) causes resistance to the slide movement of the shutter 30, and the magnetization patterns skip over the same pattern to be changed to the next inverted patterns in a short time. As a result, a click sensation occurs when passing through the same pattern between the first sheet member 41 and the second sheet member 42 by the operation of the operation part 31.

FIG. 6 is a diagram explaining an example of a positional relationship between the first sheet member 41 and the second sheet member 42 at the use prohibition position of the camera 20 of the shutter mechanism 10 according to the present embodiment.

As illustrated in FIG. 6, when the shutter 30 is located at the use prohibition position, the first sheet member 41 and the second sheet member 42 are arranged to have mutually inverted magnetization patterns of the north pole PN and the south pole PS while the second sheet member 42 is located at the right end. When the magnetization patterns of the first sheet member 41 and the second sheet member 42 are the mutually inverted patterns, a gravitation (attraction force) occurs between the first sheet member 41 and the second sheet member 42, and thus the shutter is in a stable state to maintain this position (camera use prohibition position of the shutter 30).

At the use prohibition position, the indicator hole 32, the visible light receiving hole 33, and the infrared receiving hole 34 of the shutter 30 deviate from the positions of the indicator lamp 21, the light receiving unit 22, the infrared receiving unit 23, and the infrared irradiation unit 24 of the camera 20 to cover the indicator lamp 21, the light receiving unit 22, the infrared receiving unit 23, and the infrared irradiation unit 24. As a result, the camera 20 is in an unusable state.

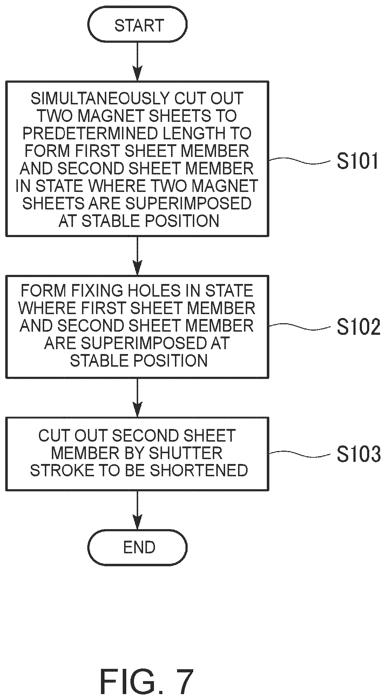

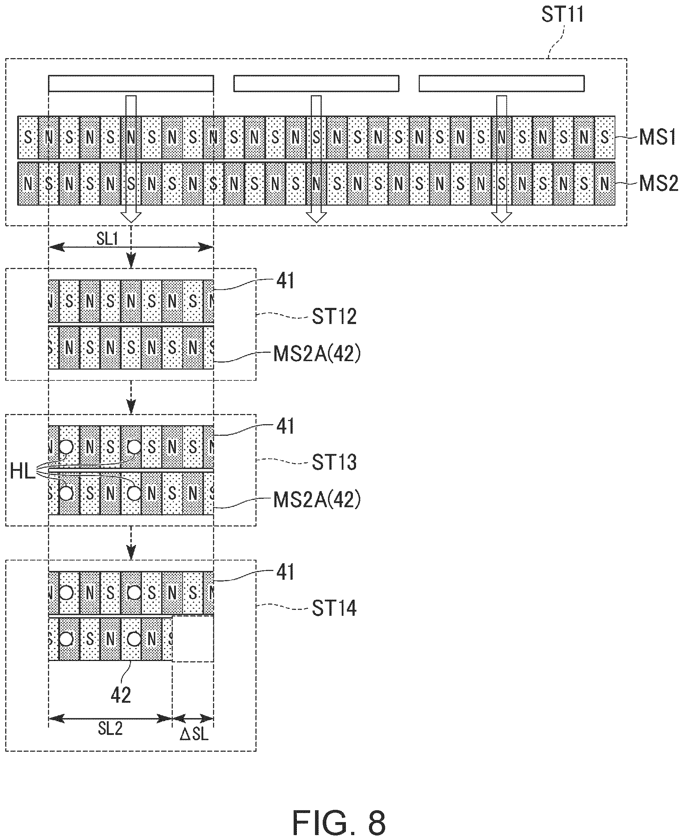

Next, a method of manufacturing the shutter mechanism 10 according to the present embodiment will be described with reference to the drawings. Herein, a method of manufacturing the first sheet member 41 and the second sheet member 42 will be described with reference to FIGS. 7 and 8.

FIG. 7 is a flowchart illustrating an example of a method of manufacturing the first sheet member 41 and the second sheet member 42 according to the present embodiment.

FIG. 8 is a diagram explaining the example of the method of manufacturing the first sheet member 41 and the second sheet member 42 according to the present embodiment.

First, as illustrated in FIG. 7, in a state where two magnet sheets (MS1, MS2) are superimposed at a stable position, that is, at a position where the top and bottom magnet sheets have the maximally different magnetic poles, the two magnet sheets are cut out to a predetermined length (length SL1) to form the first sheet member 41 and the second sheet member 42 (magnet sheet MS2A) (Step S101). In other words, the two magnet sheets (MS1, MS2) are superimposed to have mutually inverted magnetization patterns as in a state ST11 of FIG. 8, for example. In this state, the two magnet sheets (MS1, MS2) are cut out to the length SL1 that is a length of the first sheet member 41 in the slide movement direction (state ST12 of FIG. 8).

Next, in a state where the first sheet member 41 and the second sheet member 42 (magnet sheet MS2A) are superimposed at a stable position, fixing holes HL are formed (Step S102). As illustrated in a state ST13 of FIG. 8, the two fixing holes HL are formed in the first sheet member 41 and the second sheet member 42 (magnet sheet MS2A).

Note that the two fixing holes HL are an example of marks for positioning the first sheet member 41 and the second sheet member 42. A process of Step S103 corresponds to a process of adding the marks for positioning the first sheet member 41 and the second sheet member 42 to the first sheet member 41 and the second sheet member 42 in the state where the first sheet member 41 and the second sheet member 42 are superimposed.

Next, the second sheet member 42 (magnet sheet MS2A) is cut out by a shutter stroke (length ΔSL) to be shortened (Step S103). In other words, as illustrated in a state ST14 of FIG. 8, the magnet sheet MS2A having the length SL1 is cut out by the length ΔSL to make the second sheet member 42 having the length SL2.

Note that, as indicated by Expression (1), a length of a shutter stroke (length ΔSL) corresponds to a length obtained by multiplying the number of click sensations N generated by the slide movement of the shutter 30 by a length (2×pitch PT) of double of the predetermined pitch (pitch PT).

$$\texttt{Length ΔSL=Number of click sensations N×2×Pitch PT}$$
$$\texttt{... (1)}$$

After executing the process of Step S103, the first sheet member 41 is fixed to the pedestal 40 by using the fixing hole HL, and the second sheet member 42 is fixed to the shutter 30 by using the fixing hole HL.

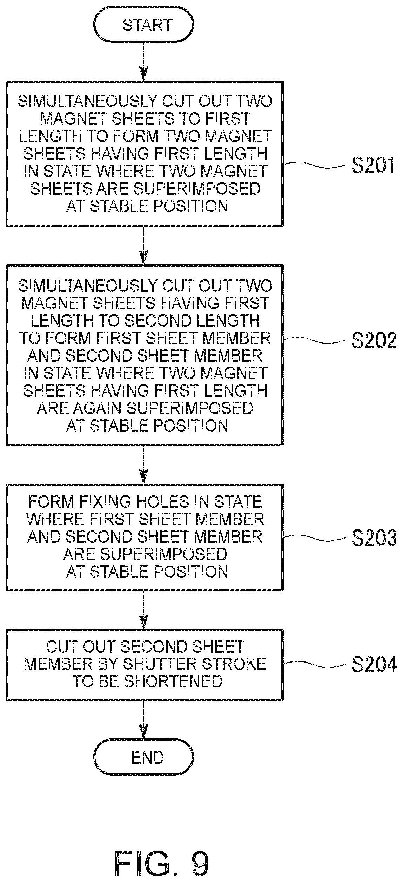

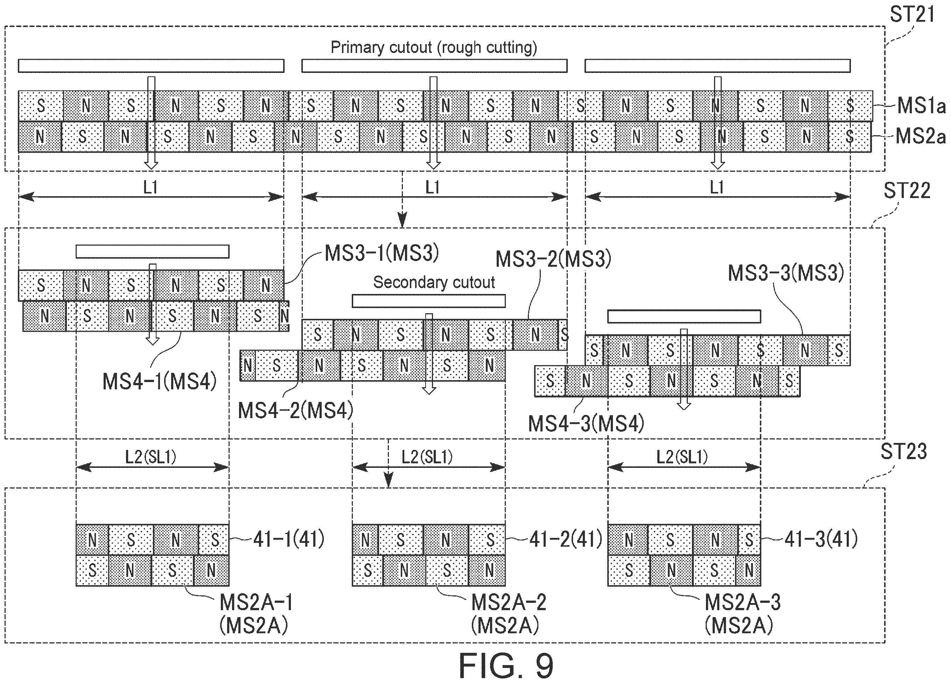

Next, a modified example of a method of manufacturing the first sheet member 41 and the second sheet member 42 will be described with reference to FIGS. 9 and 10.

In a case where the first sheet member 41 and the second sheet member 42 are made (manufactured) from the extremely long two magnet sheets, the poles of the same-pole pattern may be superimposed to generate the repulsive portions due to the variation in the pitch PT (magnetization pitch) between the north poles PN and the south poles PS when the two magnet sheets are superimposed. In the present modified example, as described above, the example of making (manufacturing) the first sheet member 41 and the second sheet member 42 by using the extremely long two magnet sheets will be described.

FIG. 9 is a flowchart illustrating a modified example of a method of manufacturing the first sheet member 41 and the second sheet member 42 according to the present embodiment. FIG. 10 is a diagram explaining the modified example of the method of manufacturing the first sheet member 41 and the second sheet member 42 according to the present embodiment.

First, as illustrated in FIG. 9, in a state where two magnet sheets (MS1a, MS2a) are superimposed at a stable position, the two magnet sheets are simultaneously cut out to a first length (length L1) to form two magnet sheets having the first length (length L1) (Step S201). In other words, the two magnet sheets (MS1a, MS2a) are superimposed to have mutually inverted magnetization patterns as in a state ST21 of FIG. 10, for example. In this state, the two magnet sheets (MS1a, MS2a) are cut out to the length L1. Note that the length L1 has a value longer than the length SL1 of the first sheet member 41.

In the example illustrated in FIG. 10, two magnet sheets (MS3, MS4) having the length L1 include magnet sheets (MS3-1, MS4-1), magnet sheets (MS3-2, MS4-2), and magnet sheets (MS3-3, MS4-3).

Next, in a state where the two magnet sheets (MS3, MS4) having the first length (length L1) are again superimposed at a stable position, the two magnet sheets are simultaneously cut out to a second length (length L2) to form the first sheet member 41 and the second sheet member 42 (Step S202). In other words, as illustrated in a state ST22 of FIG. 10, the two magnet sheets (MS3, MS4) of each of "the two magnet sheets (MS3-1, MS4-1)", "the two magnet sheets (MS3-2, MS4-2)", and "the two magnet sheets (MS3-3, MS4-3)" are superimposed to have mutually inverted magnetization patterns. In this state, the two magnet sheets (MS3, MS4) are cut out to the length L2 (the length SL1 of the first sheet member 41).

As a result, as illustrated in a state ST23 of FIG. 10, the first sheet member 41 and the second sheet member 42 (the magnet sheet MS2A) having the length L2 (the length SL1 of the first sheet member 41) include "first sheet member 41-1 and magnet sheet MS2A-1", "first sheet member 41-2 and magnet sheet MS2A-2", and "first sheet member 41-3 and magnet sheet MS2A-3".

Note that the top and bottom repulsion caused by the superposition of the long magnet sheets (MS1a, MS2a) by the process of Step S201 described above can be reduced in the next Step S202.

Because the processes of the next Steps S203 and S204 are the same as the processes (the states ST13 and ST14 of FIG. 8) of Steps S102 and S103 illustrated in FIG. 7, their descriptions are omitted.

As described above, the shutter mechanism 10 according to the present embodiment includes the camera 20, the shutter 30, the first sheet member 41, and the second sheet member 42. The camera 20 includes the light receiving unit 22, and is mounted on the first chassis 101 (chassis in claims) of the laptop PC 100 (information processing apparatus in claims). The shutter 30 can slide between the first position at which the light reception of the light receiving unit 22 is limited and the second position at which the limitation of light reception is released. The first sheet member 41 is a sheet-shaped magnet sheet that is relatively fixed to the first chassis 101 (chassis in claims), and includes the north poles PN and the south poles PS that are alternately arranged in the slide movement direction (X direction) at the predetermined pitch (pitch PT). The second sheet member 42 is a sheet-shaped magnet sheet relatively fixed to the shutter 30 so that the magnetized surface of the sheet faces the magnetized surface of the first sheet member 41. Moreover, at the first position (the use permission position of the camera 20) and the second position (the use prohibition position of the camera 20), the second sheet member 42 includes the north poles PN and the south poles PS of which the magnetization pattern of the magnetized surface is inverted from that of the first sheet member 41 and that are alternately arranged in the slide movement direction at the predetermined pitch (pitch PT). In other words, the second sheet member 42 includes the north poles and the south poles that are alternately arranged in the slide movement direction at the predetermined pitch, and has the magnetization pattern of north and south poles of the magnetized surface that is inverted from the magnetization pattern of the first sheet member 41 when being viewed from the direction facing the first sheet member 41 at the first position and the second position.

As a result, when the second sheet member 42 relatively fixed to the shutter 30 is slid, the shutter mechanism 10 according to the present embodiment generates a repulsion (repulsive force) at the position at which the magnetization patterns of the first sheet member 41 and the second sheet member 42 are identical, and generates a gravitation (attraction force) at the position at which the magnetization patterns of the first sheet member 41 and the second sheet member 42 are inverted. For that reason, the shutter is slid quickly and with a weak force when the shutter is moved from the position at which the magnetization patterns are identical to the position at which the magnetization patterns are inverted, and the shutter is difficult to be slid due to a strong resistance force when the shutter is moved from the position at which the magnetization patterns are inverted to the position at which the magnetization patterns are identical. For this reason, the shutter mechanism 10 according to the present embodiment can generate a click sensation by the slide movement of the shutter 30.

In the shutter mechanism 10 according to the present embodiment, because the magnetization patterns of the first sheet member 41 and the second sheet member 42 are inverted at the first position (the use permission position of the camera 20) and the second position (the use prohibition position of the camera 20), the shutter 30 does not carelessly move due to gravity, vibration, etc.

In the shutter mechanism 10 according to the present embodiment, because there is no need to provide a protrusion or an elastic body such as a flat spring for generating a click sensation, the shutter mechanism can have a simplified configuration and be downsized. Therefore, the shutter mechanism 10 according to the present embodiment can be downsized while generating an appropriate click sensation by the movement of the shutter 30.

For example, because the shutter mechanism 10 according to the present embodiment employs magnet sheets, the magnet sheets can be stored on the camera board PB, and thus the size of the bezel 105 in the short-side direction (Y direction) and the size of the first chassis 101 in the thickness direction (Z direction) can be shortened.

In the present embodiment, the length SL2 of the second sheet member 42 in the slide movement direction is configured to be shorter than the length SL1 of the first sheet member 41 in the slide movement direction by the movable length (length $\Delta$SL) of the shutter 30.

As a result, the shutter mechanism 10 according to the present embodiment can appropriately set the movement amount of the shutter 30 and can set the first position (the use permission position of the camera 20) and the second position (the use prohibition position of the camera 20) to appropriate positions.

In the present embodiment, the length SL2 of the second sheet member 42 in the slide movement direction is configured to be shorter than the length SL1 of the first sheet member 41 in the slide movement direction by the length obtained by multiplying the number of click sensations N generated by the slide movement of the shutter 30 by the length ($2\times$pitch PT) of double of the predetermined pitch (pitch PT) (see Expression (1)).

As a result, the shutter mechanism 10 according to the present embodiment can generate the appropriate number of click sensations when the shutter 30 is slid.

The laptop PC 100 (information processing apparatus) according to the present embodiment includes the shutter mechanism 10 and the first chassis 101 mounted with the shutter mechanism 10 as described above.

As a result, the laptop PC 100 (information processing apparatus) according to the present embodiment can be downsized and lightened by mounting thereon the shutter mechanism 10 because the shutter mechanism 10 can be downsized.

In the present embodiment, the display unit 104 is mounted on the first chassis 101. The shutter mechanism 10 is arranged in the bezel 105 portion that is provided on the first chassis 101 to surround the display unit 104.

As a result, the laptop PC 100 according to the present embodiment can shorten the size of the bezel 105 in the short-side direction (Y direction) and can shorten the size of the first chassis 101 in the thickness direction (Z direction). Therefore, the laptop PC 100 according to the present embodiment can increase the size of the display unit 104. Moreover, the laptop PC 100 according to the present embodiment can downsize and thin the first chassis 101 because the size of the first chassis 101 in the thickness direction can be reduced.

The method of manufacturing the shutter mechanism 10 according to the present embodiment includes the first process (process of Step S101 in FIG. 7), the second process (process of Step S102 in FIG. 7), and the third process (process of Step S103 in FIG. 7). Note that the shutter mechanism 10 includes the shutter 30, the first sheet member 41, and the second sheet member 42 as described above. The first process is a process of cutting out the first sheet member 41 and the second sheet member 42 (the magnet sheet MS2A) from the two magnet sheets (MS1, MS2) in the state where the two magnet sheets (MS1, MS2) are superimposed at the stable position at which the north poles PN and the south poles PS of the magnetized surfaces facing each other are mutually inverted. The second process is a process of adding the marks for positioning the first sheet member 41 and the second sheet member 42 (the magnet sheet MS2A) to the first sheet member 41 and the second sheet member 42 (the magnet sheet MS2A) in the state where the first sheet member 41 and the second sheet member 42 (the magnet sheet MS2A) are superimposed. The third process is a process of cutting out the second sheet member 42 to be shortened by the movable length of the shutter 30.

As a result, according to the method of manufacturing the shutter mechanism 10 in the present embodiment, the appropriate first sheet member 41 and second sheet member 42 can be manufactured, and the shutter mechanism 10 and the laptop PC 100 can be downsized.

In the present embodiment, the marks for positioning are the fixing holes HL for fixing the first sheet member 41 and the second sheet member 42. The second process is a process of forming the fixing holes HL in the state where the first sheet member 41 and the second sheet member 42 (the magnet sheet MS2A) are superimposed.

As a result, according to the method of manufacturing the shutter mechanism 10 in the present embodiment, the first sheet member 41 and the second sheet member 42 can be fixed with an appropriate positional relationship by forming the fixing holes HL.

In the present embodiment, the first process (process of Steps S201 and S202 in FIG. 9) is a process of cutting out the two magnet sheets (MS1a, MS2a) to the first length L1 in the slide movement direction in the state where the two magnet sheets are superimposed, and cutting out the cut two magnet sheets having the first length L1 to the second length L2 (SL1) shorter than the first length L1 in the state where the cut two magnet sheets having the first length L1 are superimposed at the stable position at which the north poles PN and the south poles PS on the magnetized surfaces facing each other are mutually inverted, to cut out the first sheet member 41 and the second sheet member 42 (the magnet sheet MS2A).

As a result, according to the method of manufacturing the shutter mechanism 10 in the present embodiment, even if the first sheet member 41 and the second sheet member 42 are manufactured from the extremely long two magnet sheets (MS1a, MS2a), for example, and even if the variation in the pitch PT (magnetization pitch) presents a problem, the appropriate first sheet member 41 and second sheet member 42 can be manufactured, and the shutter mechanism 10 and the laptop PC 100 can be downsized.

Note that the present invention is not limited to the above embodiments and the embodiments can be changed without departing from the spirit of the present invention.

For example, in the above embodiments, it has been described that the information processing apparatus is the laptop PC 100 as an example, but the present embodiment is not limited to this and the information processing apparatus may be the other information processing apparatus such as a tablet terminal device, a smartphone, and an electronic device including a camera.

In the above embodiments, it has been described that the shutter mechanism 10 is mounted in the bezel 105 portion of the first chassis 101 including the display unit 104 as an example, but the present embodiment is not limited to this and the shutter mechanism 10 may be mounted in the other chassis (location) such as a chassis without the display unit 104 and a portion other than the bezel 105.

In the above embodiments, it has been described that the camera 20 using the shutter mechanism 10 includes the indicator lamp 21, the light receiving unit 22 (visible light camera) for visible light, the infrared receiving unit 23 (infrared camera), and the infrared irradiation unit 24 as an example, but the present embodiment is not limited to this and the camera 20 may be a camera having a different configuration. For example, the camera 20 may be configured so as not to include some of the indicator lamp 21, the light receiving unit 22 (visible light camera) for visible light, the infrared receiving unit 23 (infrared camera), and the infrared irradiation unit 24.

In the above embodiments, it has been described that the fixing holes HL are employed as an example of the marks for positioning, but the present embodiment is not limited to this and the other mark such as an indicator may be used. Moreover, the addition of the marks for positioning may be the other processing such as printing.

The number (the number of magnetic pole patterns) of the magnetization patterns of the first sheet member 41 and the second sheet member 42 is not limited to the above embodiments, and may be changed in accordance with an information processing apparatus to be used.

Description of Symbols

10 shutter mechanism
20 camera
21 indicator lamp
22 light receiving unit
23 infrared receiving unit
24 infrared irradiation unit
25 connector
30 shutter
31 operation part
32, 35 indicator hole
33, 36 visible light receiving hole
34, 37 infrared receiving hole
38 infrared irradiation hole
39 operation hole
40 pedestal
41, 41-1, 41-2, 41-3 first sheet member
42 second sheet member
100 laptop PC
101 first chassis
102 second chassis
103 hinge mechanism
104 display unit
105 bezel
109 cover plate
111 keyboard
112 touch pad
PB camera board
MS1, MS1a, MS2, MS2a, MS3, MS3-1, MS3-2, MS3-3, MS4, MS4-1, MS4-2, MS4-3, MS2A, MS2A-1, MS2A-2, MS2A-3 magnet sheet

**Claims**

1. A shutter mechanism comprising:

   a camera that includes a light receiving unit, the camera being configured to be mounted on a chassis of an information processing apparatus;
   a shutter that is slidable between a first position and a second position, the first position arranged to limit light reception of the light receiving unit, the second position arranged to release limitation of the light reception;
   a first sheet member that is a sheet-shaped magnet sheet configured to be relatively fixed to the chassis, the first sheet member including north poles and south poles that are alternately arranged in a slide movement direction at a predetermined pitch; and
   a second sheet member that is a sheet-shaped magnet sheet relatively fixed to the shutter so that a magnetized surface of the sheet faces a magnetized surface of the first sheet member, the second sheet member including north poles and south poles that are alternately arranged in the slide movement direction at the predetermined pitch and having a magnetization pattern of the north and south poles of the magnetized surface inverted from a magnetization pattern of the first sheet member when being viewed from a direction facing the first sheet member at the first position and the second position.

2. The shutter mechanism according to claim 1, wherein

a length of the second sheet member in the slide movement direction is configured to be shorter than a length of the first sheet member in the slide movement direction by a movable length of the shutter.

3. The shutter mechanism according to claim 2, wherein
the length of the second sheet member in the slide movement direction is configured to be shorter than the length of the first sheet member in the slide movement direction by a length obtained by multiplying a number of click sensations generated by a slide movement of the shutter by a length of double of the predetermined pitch.

4. An information processing apparatus comprising:

   a shutter mechanism according to any one of claims 1 to 3; and
   a chassis on which the shutter mechanism is mounted.

5. The information processing apparatus according to claim 4, comprising

   a display unit mounted on the chassis, wherein
   the shutter mechanism is arranged in a bezel portion that is provided on the chassis to surround the display unit.

6. The information processing apparatus according to claim 5, wherein
the first sheet member and the second sheet member are arranged in the bezel portion to overlap each other in a thickness direction of the chassis.

7. A method of manufacturing a shutter mechanism, the shutter mechanism including: a camera that includes a light receiving unit, the camera being configured to be mounted on a chassis of an information processing apparatus; a shutter that is slidable between a first position and a second position, the first position arranged to limit light reception of the light receiving unit, the second position arranged to release limitation of the light reception; a first sheet member that is a sheet-shaped magnet sheet configured to be relatively fixed to the chassis, the first sheet member including north poles and south poles that are alternately arranged in a slide movement direction at a predetermined pitch; and a second sheet member that is a sheet-shaped magnet sheet relatively fixed to the shutter so that a magnetized surface of the sheet faces a magnetized surface of the first sheet member, the second sheet member including north poles and south poles that are alternately arranged in the slide movement direction at the predetermined pitch and having a magnetization pattern of the north and south poles of the magnetized surface inverted from a magnetization pattern of the first sheet member when being viewed from a direction facing the first sheet member at the first position and the second position, the method comprising:

   cutting out the first sheet member and the second sheet member from the two magnet sheets in a state where the two magnet sheets are superimposed at a stable position at which the north poles and the south poles on the magnetized surfaces facing each other are mutually inverted;
   adding marks for positioning the first sheet member and the second sheet member to the first sheet member and the second sheet member in a state where the first sheet member and the second sheet member are superimposed; and
   cutting out the second sheet member to be shortened by a movable length of the shutter.

8. The method of manufacturing the shutter mechanism according to claim 7, wherein

   the marks for positioning include fixing holes for fixing the first sheet member and the second sheet member, and
   the adding the marks for positioning includes forming the fixing holes in the state that the first sheet member and the second sheet member are superimposed.

9. The method of manufacturing the shutter mechanism according to claim 7 or 8, wherein
the cutting out the first sheet member and the second sheet member includes cutting out the two magnet sheets to a first length in the slide movement direction in a state where the two magnet sheets are superimposed, and cutting out the cut two magnet sheets having the first length to a second length shorter than the first length in a state where the cut two magnet sheets are superimposed at a stable position at which the north poles and the south poles on the magnetized surfaces facing each other are mutually inverted, to cut out the first sheet member and the second sheet member.

FIG. 1

FIG. 2

FIG. 3

FIG. 4

FIG. 5

FIG. 6

START

SIMULTANEOUSLY CUT OUT
TWO MAGNET SHEETS TO
PREDETERMINED LENGTH TO
FORM FIRST SHEET MEMBER
AND SECOND SHEET MEMBER
IN STATE WHERE TWO MAGNET
SHEETS ARE SUPERIMPOSED
AT STABLE POSITION

S101

FORM FIXING HOLES IN STATE
WHERE FIRST SHEET MEMBER
AND SECOND SHEET MEMBER
ARE SUPERIMPOSED AT
STABLE POSITION

S102

CUT OUT SECOND SHEET
MEMBER BY SHUTTER
STROKE TO BE SHORTENED

S103

END

FIG. 7

FIG. 8

START

SIMULTANEOUSLY CUT OUT TWO MAGNET SHEETS TO FIRST LENGTH TO FORM TWO MAGNET SHEETS HAVING FIRST LENGTH IN STATE WHERE TWO MAGNET SHEETS ARE SUPERIMPOSED AT STABLE POSITION — S201

SIMULTANEOUSLY CUT OUT TWO MAGNET SHEETS HAVING FIRST LENGTH TO SECOND LENGTH TO FORM FIRST SHEET MEMBER AND SECOND SHEET MEMBER IN STATE WHERE TWO MAGNET SHEETS HAVING FIRST LENGTH ARE AGAIN SUPERIMPOSED AT STABLE POSITION — S202

FORM FIXING HOLES IN STATE WHERE FIRST SHEET MEMBER AND SECOND SHEET MEMBER ARE SUPERIMPOSED AT STABLE POSITION — S203

CUT OUT SECOND SHEET MEMBER BY SHUTTER STROKE TO BE SHORTENED — S204

END

FIG. 9

FIG. 9

EP 4 660 698 A1

Europäisches
Patentamt
European
Patent Office
Office européen
des brevets

# EUROPEAN SEARCH REPORT

**Application Number**

EP 25 16 3558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 11 914 270 B2 (LENOVO SINGAPORE PTE LTD [SG]) 27 February 2024 (2024-02-27) | 1-6 | INV. G03B11/04 G06F1/16 G06F3/01 |
| A | * columns 2-10; figures 1, 3, 6, 7, 9, 12 * | 7-9 | |
| Y | US 2020/012407 A1 (YASU KENTARO [JP]) 9 January 2020 (2020-01-09) * paragraphs [0054] - [0058], [0081], [0223]; figures 6, 7, 39 * | 1-6 | |
| Y | US 2015/009399 A1 (JONSSON KARL S [US] ET AL) 8 January 2015 (2015-01-08) * paragraphs [0055] - [0058], [0065] - [0067]; figures 1, 4, 6 * | 6 | |

**TECHNICAL FIELDS SEARCHED (IPC)**

G03B
G06F

The present search report has been drawn up for all claims

| Place of search | Date of completion of the search | Examiner |
|---|---|---|
| Munich | 23 July 2025 | Rückerl, Ralph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 3558

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2025

| Patent document cited in search report | | Publication date | Patent family member(s) | | Publication date |
|---|---|---|---|---|---|
| US 11914270 | B2 | 27-02-2024 | JP | 2023006941 A | 18-01-2023 |
| | | | US | 2023004068 A1 | 05-01-2023 |
| US 2020012407 | A1 | 09-01-2020 | JP | 6604643 B2 | 13-11-2019 |
| | | | JP | 6781814 B2 | 04-11-2020 |
| | | | JP | 6981515 B2 | 15-12-2021 |
| | | | JP | 2020038677 A | 12-03-2020 |
| | | | JP | 2021022389 A | 18-02-2021 |
| | | | JP | WO2018159855 A1 | 07-03-2019 |
| | | | US | 2020012407 A1 | 09-01-2020 |
| | | | WO | 2018159855 A1 | 07-09-2018 |
| US 2015009399 | A1 | 08-01-2015 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020201886 A